# EUROPEAN PATENT APPLICATION

(11) **EP 3 604 750 A1**
(43) Date of publication of application: **05.02.2020**
(21) Application number: 17903668.6
(22) Date of filing: 31.03.2017
(51) Int. Cl.: F01N 3/00

(54) **DEVICE FOR REDUCING POLLUTANT GAS EMISSIONS BY MEANS OF CATALYST MANAGEMENT IN THE COMBUSTION PROCESS**

(30) Priority: 30.03.2017 ES 201730376
(71) Applicant: Morillas Gomez, Ignacio, 28009 Madrid (ES); Encolnvest International, S.L., 28290 Las Rozas Madrid (ES)
(72) Inventor: MORILLAS GOMEZ, Ignacio, 28009 Madrid (ES)
(74) Representative: Ungria López, Javier
(86) International application number: PCT/ES2017/070196
(87) International publication number: WO 2018/178410

(57) **Abstract**

The invention relates to a device for reducing pollutant gas emissions by means of catalyst management in the combustion process, characterised in that it comprises: a hollow cylindrical body with a fuel inlet hole in one side of said cylindrical body and a fuel outlet hole in the other side of said cylindrical body; a perforated cylindrical separator inside said body; and a sheet formed by at least one magnetic element and which is situated between the perforated separator and the inner wall of the hollow cylindrical body, such that when the fuel flows inside the device, part of the components of the hydrocarbon magnetise.

## Description

### Field of the invention

The present invention relates, in general, to a device that makes it possible to reduce pollutant gas emissions by means of catalyst management in the combustion process of motor vehicles by acting on the fuel or hydrocarbon before it enters the engine.

### Background of the invention

Hydrogen is the largest component of hydrocarbons. Hydrogen has a dipole moment, which may be diamagnetic or paramagnetic, that is, with a weak or strong response to magnetic flux. Therefore, it appears in two forms or isomer types, para and ortho, characterised by the rotation of its nuclei.

In the ortho molecule, which occupies odd energy levels, the rotations are parallel with the same orientation for both atoms and, for this reason, it is paramagnetic and a catalyst for many reactions.

The orientation of the rotation has an important effect on physical properties such as specific heat and vapour pressure, as well as behaviour on the gas molecule.

### Description of the invention

An alternative to the state of the art that solves the shortcomings found therein is required and, contrary to existing solutions, the present invention focuses on a device (100) for reducing pollutant gas emissions by means of catalyst management in the combustion process.

Said device (100) has, among others, thermal conductivity and magnetism properties, and transfers those properties to the fuel molecules with which it is in contact, generating a coercive force which provides a magnetic field with the force necessary to alter these molecules.

These two properties affect the hydrocarbon or fuel molecules, which become the subject of forces under the action of the magnetic field and endure through conduction of that capacity.

This is the key to ensure that the magnetism capacity does not have an instantaneous effect and that it lasts long enough to burn more efficiently.

At the same time, as a result of that conductivity which generates the duration of the effect, and assuming that the fuel is composed of a group of molecules, each of these molecules generates a magnetic field by itself, due to which in that sense, when in contact with the reactive sheet, they change their structure by reacting, trapping the oxygen molecules that are generated and producing a better air and fuel mixture, which translates into a more efficient combustion.

Specifically, the present invention provides for a device (100) for reducing pollutant gas emissions, by means of catalyst management in the combustion process, comprising a hollow cylindrical body with a fuel inlet hole (104) in one side of said cylindrical body and a fuel outlet hole (103) in the other side of said cylindrical body; a perforated cylindrical separator (110) inside said body; and a reactive sheet (120) formed by at least one magnetic element, which is situated between the perforated separator (110) and the inner wall of the hollow cylindrical body, such that when the fuel flows inside the device (100), part of the components of the hydrocarbon magnetise.

### Brief description of the figures

The above and other advantages and features will be more fully understood from the following detailed description of embodiments, using the following figures as reference, which should be considered in an illustrative and non-limiting manner.

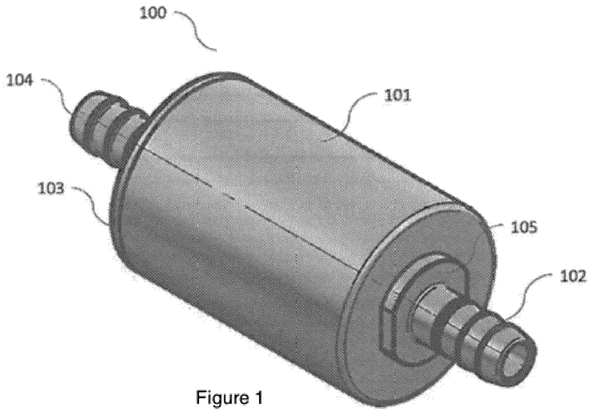

Figure 1 shows a perspective diagram of an embodiment of the device object of the present invention.

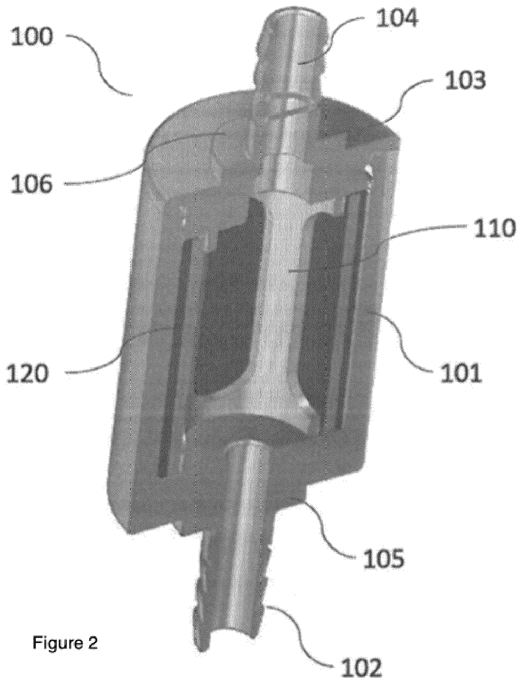

Figure 2 shows a perspective diagram of a cross section of an embodiment of the device object of the present invention.

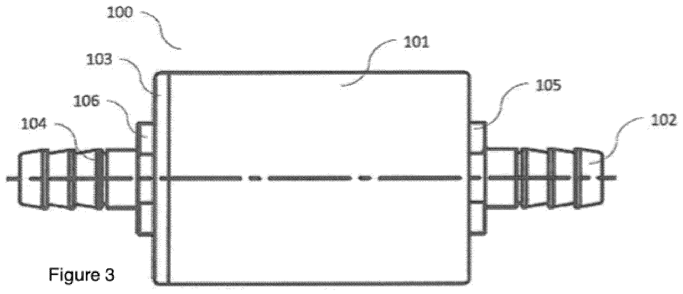

Figure 3 shows a diagram of a front view of an embodiment of the device object of the present invention.

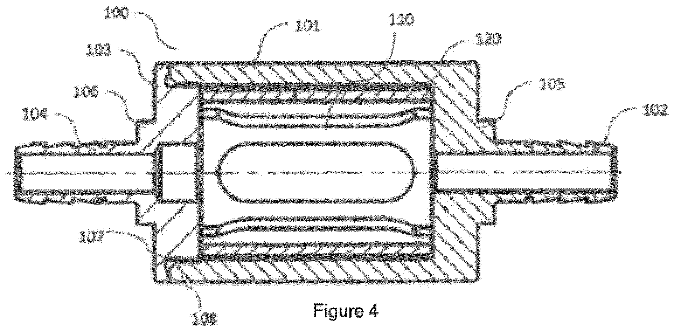

Figure 4 shows a diagram of a cross section of an embodiment of the device object of the present invention.

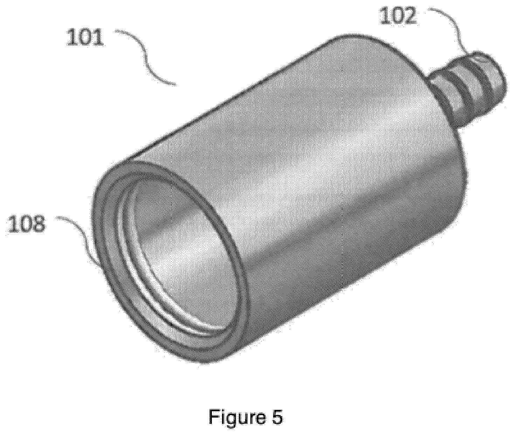

Figure 5 shows a perspective diagram of an embodiment of the cylindrical body part of the device object of the present invention.

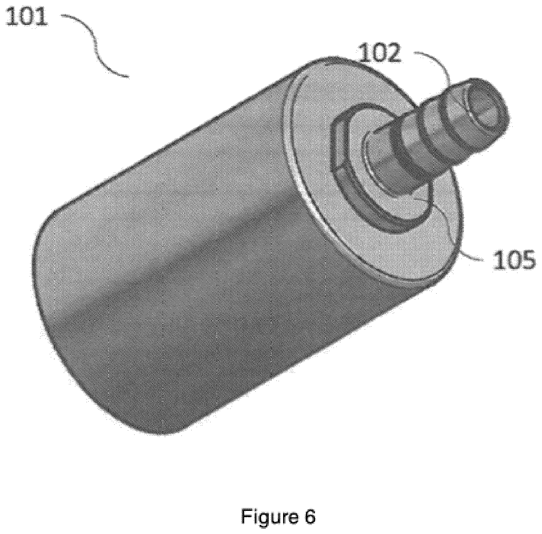

Figure 6 shows a diagram of another perspective of an embodiment of the cylindrical body part of the device object of the present invention.

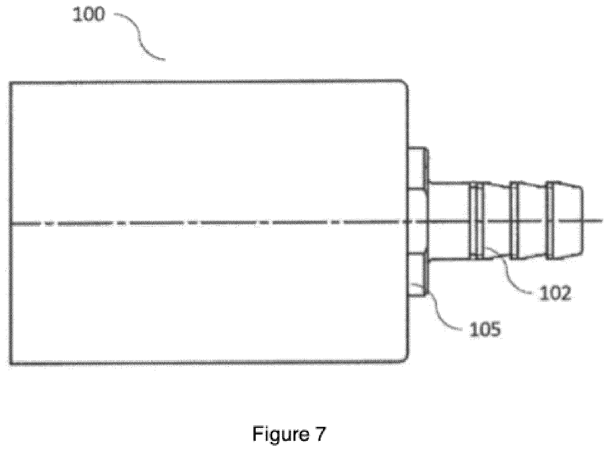

Figure 7 shows a diagram of a front view of an embodiment of the cylindrical body part of the device object of the present invention.

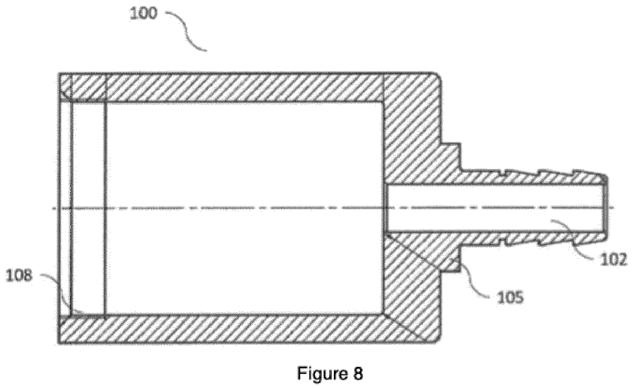

Figure 8 shows a diagram of a cross section of an embodiment of the cylindrical body part of the device object of the present invention.

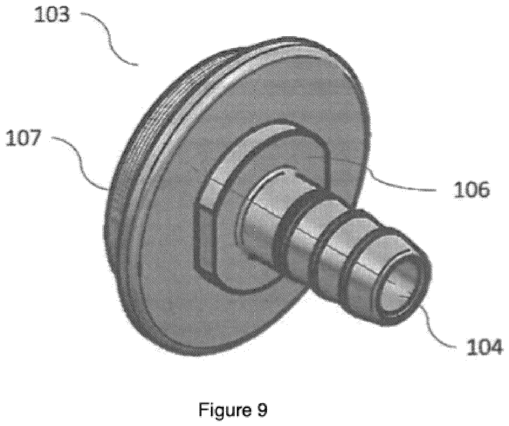

Figure 9 shows a perspective diagram of an embodiment of the cover part of the device object of the present invention.

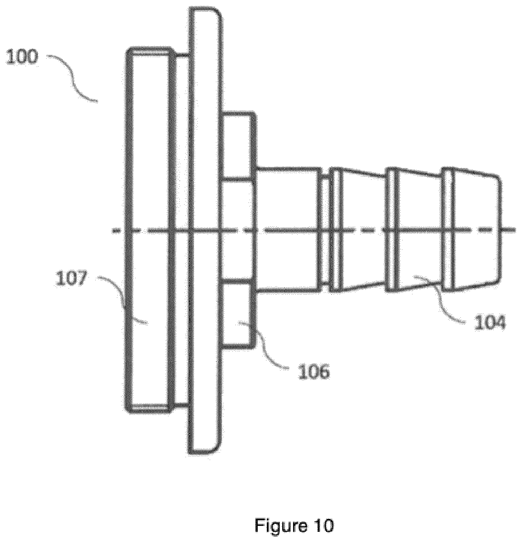

Figure 10 shows a diagram of a front view of an embodiment of the cover part of the device object of the present invention.

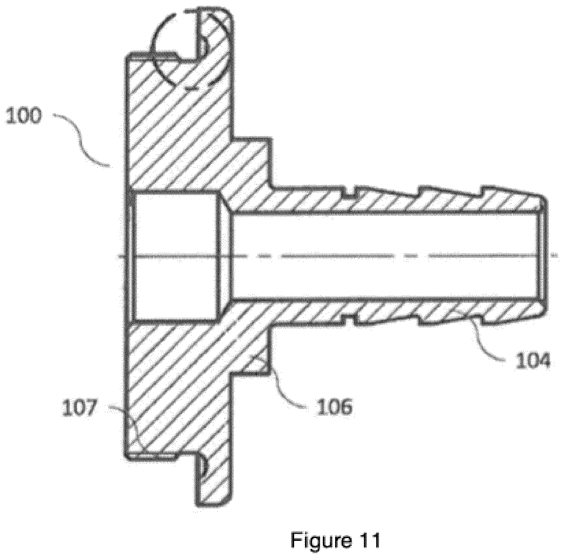

Figure 11 shows a diagram of a cross section of an embodiment of the cover part of the device object of the present invention.
Figure 12 shows a perspective diagram of an embodiment of the inner cylinder of the device object of the present invention.
Figure 13 shows a diagram of a cross section of an embodiment of the inner cylinder of the device object of the present invention.

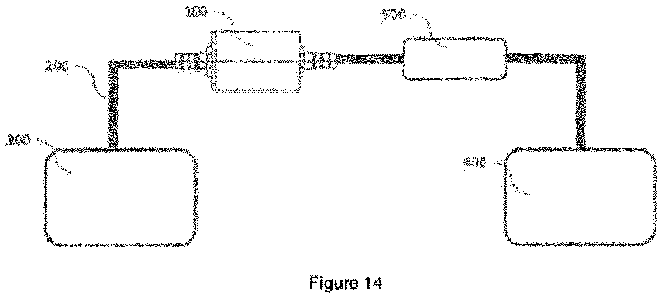

Figure 14 shows an installation diagram of the installation of the device object of the present invention, placing it between the fuel tank and the gasoline or diesel filter.
Figure 15 shows an installation diagram of the installation of the device object of the present invention, placing it between the gasoline or diesel filter and the engine.

### Detailed description of the invention

The device (100) is formed by a cylinder or similar body having a fuel inlet or outlet hole (104) and another outlet or inlet hole (102), depending on the function performed by the first hole (104), since the position of the device and the fuel flow does not affect its operation; and inside which is located a perforated separator (110), preferably with a cylindrical shape, with a somewhat smaller diameter than the diameter of the outer cylinder. Between said perforated separator and the inner wall of the cylindrical device, a reactive sheet (120) with magnetic properties is situated, which incorporates, among other components, barium ferrite, which allows part of the components of the fuel or hydrocarbon to magnetise when the fuel passes through the interior of said device (100).

Said reactive sheet (120) can be provided as a plasteostruso, i.e., a magnetic rubber obtained by extrusion and, in this particular case of the present invention, it has the characteristic of being multipolar on one of the faces with a high percentage of barium ferrite, which provides a magnetic reference of 2800/3100 Oersted for coercive force and 1800/1900 Gauss for induction force.

In one embodiment, the outer cylinder is formed by two parts. A first hollow part with a cylindrical body (101), having one of the holes (102), the hydrocarbon or fuel inlet or outlet hole, in one of the bases, in the shape of a pin so that the fuel supply pipe can fit into said pin. The second part is formed by a cover (103) that incorporates the second fuel outlet or inlet hole (104) in its base, depending on the position in which the device (100) is placed, also in the shape of a pin to fit the supply tube.

Said cover (103) is arranged to fit in the first part, the cylindrical body (101), by means of a mechanised thread complementary to both parts (107 and 108).

At the base of both fuel inlet and outlet pins (102 and 104) or vice versa, there is a nut-like body (105 and 106) arranged such that the user or assembler of the device (100) can facilitate the installation by holding the device (100) with a wrench or similar when fitting the supply pipe.

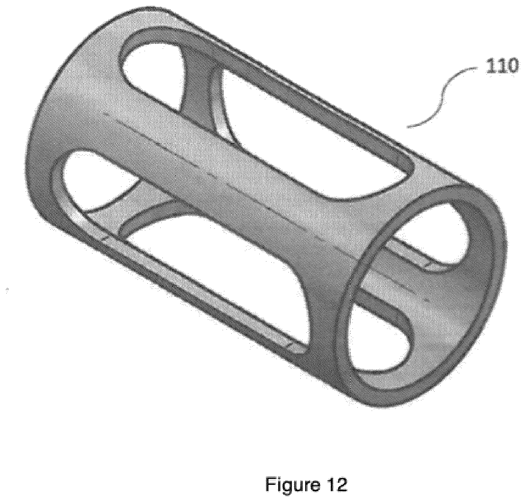

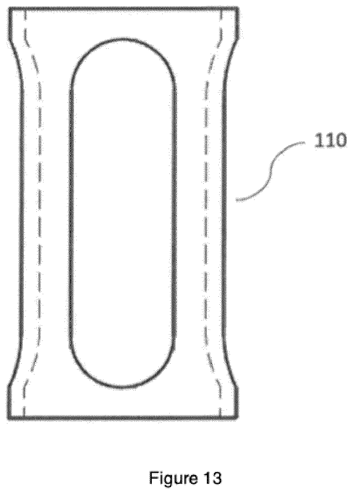

The reactive sheet (120) is located between the perforated separator (110) and the inner surface of the cylinder (101), so that it is held between both elements, maintaining a maximum contact area with the fuel and without obstructing its passage at any time. This contact with the fuel is favoured by the wide size of the perforations of the separator as shown in Figures 12 and 13.

This structure of the device (100) facilitates the manufacturing of the parts and the assembly thereof.

The device (100), when it is in operation and the fuel or hydrocarbon pass through it, causes the hydrogen molecules to change their state from the para state to the more reactive ortho state in order to achieve a better and, thus, a greater mixture of fuel and oxygen can be achieved, which causes the greatest possible optimization of the fuel to be burned making it more efficient, that is, leading to an increase or optimization of the octane or cetane rating.

When the fuel passes through the device (100) under the influence of catalyst substances, the barium ferrite compounds, mainly, provide and improve the combustion process without altering the physical and chemical characteristics of the fuel.

One of the operating principles of the active component of the device (100), that is, of the barium ferrite of the reactive sheet (120), is to increase thermal conductivity, that is to say, the heat flow increases towards the surface of the combustion chamber, altering its speed, at the same temperatures.

The catalyst components are activated during the combustion process, which directly affects combustion and improves the energy and the operational efficiency of the engine (400).

The device (100) has high levels of catalytic activity, selectivity and stability and thus reduces the percentages of pollutant gases in relation to the improvement and optimization of the fuel.

Obviously, the decrease in thermal resistance increases heat flow, and the removal of soot layers from the walls of the combustion chamber eliminates thermal resistance, which also increases the explosion resistance of the fuel.

Cleaning the combustion chamber causes:
- the stabilisation of the engine (400) for all loads,
- a reduction in fuel consumption,
- an increase in capacity and performance, and
- an improvement of environmental properties.

When the device (100) is used, in particular, the active barium ferrite component greatly increases all heat transfer coefficients, which leads to a decrease in the thermal resistance of the products of combustion and an improvement of the anti-knock rating of fuel.

Using the device (100) accelerates the oxidation of the fuel, which leads, for example, to a more complete combustion by the diesel engine.

In addition, the duration of combustion is reduced, but the duration of combustion of the fuel load is increased. This means that all the fuel burns more quickly, although the maximum combustion rate decreases.

As a result, the engine (400) starts more "smoothly", which reduces the intensity of the parts of the cylinder-piston group and increases the life of the engine.

In addition, the device (100) stabilises the combustion process itself. The device (100) reduces the load on the catalytic converters and particle filters, since it provides a more complete combustion of the fuel and greatly reduces the amount of harmful substances in the exhaust gases.

The device (100) reduces the exhaust sulphur and nitrogen oxide when the engine (400) is idling, which is especially important for engines in urban vehicles that spend a lot of time idling while stopping at traffic lights and circulating in dense traffic.

The concentration of the active components of the fuel, especially in the diesel engine, is greatly reduced in the presence of the device (100) with the decrease in the temperature in the combustion chamber and the increase in combustion efficiency. Similarly, it explains the reduction of the concentration of nitrogen oxide emissions.

The use of the device (100) with a variety of fuels makes it possible to reduce the requirements of an engine, especially as to the octane rating of the gasoline and the cetane rating of diesel, by cleaning the combustion chamber and controlling combustion.

The device (100) reduces the peak heat release rate in the combustion chamber and the "rigidity" of the engine.

The peak pressure also becomes lower in the presence of an active catalyst component of the device compared to a peak pressure without it. As a result, the engine (400) starts more "smoothly", which reduces the intensity and increases the life of the engine.

The organoelement component of the device (100), the barium ferrite, forms a halo of particles when it decomposes, whose surface oxidises cracking fuel molecules, which leads to an appreciable increase in pressure to the point of separation.

The achievement, therefore, of the catalytic cracking of the fuel molecules resulting in a component with a lower molecular weight and the preignition, slows down the oxidation reaction, which in turn decreases the peak pressure in the combustion chamber, allowing the engine to operate under less harsh conditions.

The post-combustion completion increases in the presence of the device (100) which involves removing excessive soot and minerals to clean the walls of the combustion chamber.

The use of the device (100) stabilises combustion. The stabilisation of temperature fluctuations in the combustion chamber, the burning process of the air-fuel mixture and the reduction of the local peak temperature reduce the formation of nitrogen oxides. That "detergency" of the device (100) contributes to a more complete chemical conversion of carbon, resulting in the reduction of soot emissions in a spectacular manner.

The device (100) significantly reduces the amount of harmful impurities in combustion processes, which positively affects the environment, and which is especially important for large cities and highly polluted cities.

Since it is located only in the section of the intake or supply pipe, due to its physical condition it prevents the device (100) from interfering in any mechanical part of the engine or the vehicle in the route from the tank (300) to the engine (400).

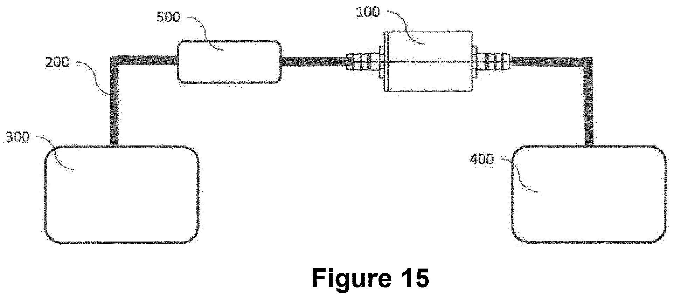

In this sense, the device (100) can be placed in the fuel supply pipe, between the fuel tank (300) and the engine (400), whether there is a gasoline or diesel filter (500) on either side of said device (100), as shown in figures 15 and 16 respectively. The result is that the combination of fuel with oxygen is dramatically improved, achieving a better mixture and more regular and continuous combustion.

The device (100) can be manufactured with a size such that the reactive sheet (120) can act on a certain fuel flow and, on the other hand, the device (100) does not exhibit sizing problems so as it to be installed inside the vehicle. However, if the device (100) is to be used for a larger flow than the one initially intended, several of these devices (100) can be incorporated in a series, that is to say, one behind the other, along the supply tube.

## Claims

1. Device (100) for reducing pollutant gas emissions by means of catalyst management in the combustion process, **characterised in that** it comprises a hollow cylindrical body with a fuel inlet hole (104) in one side of said cylindrical body, and a fuel outlet hole (103) in the other side of said cylindrical body, a perforated cylindrical separator (110) inside said body, and a reactive sheet (120) formed by at least one magnetic element which is situated between the perforated separator (110) and the inner wall of the hollow cylindrical body, such that when the fuel flows inside the device (100), part of the components of the hydrocarbon magnetise.

2. The device (100) for reducing pollutant gas emissions by means of catalyst management in the combustion process according to claim 1, **characterised in that** said at least one magnetic element is barium ferrite.

3. The device (100) for reducing pollutant gas emissions by means of catalyst management in the combustion process according to claim 1, **characterised in that** said reactive sheet (120) is provided as plasteostruso, multipolar on one of the faces, with barium ferrite, and a magnetic reference of 2800/3100 Oersted for coercive force and 1800/1900 Gauss for induction force.

4. The device (100) for reducing pollutant gas emissions by means of catalyst management in the combustion process according to claim 1, **characterised in that** said outer cylindrical body of said device (100) is formed by two parts, a first hollow part with a cylindrical body (101), wherein said outlet hole (103) is situated in one of the bases (103), and a second cover-shaped part (103) wherein the outlet hole (104) is situated in its base and said cover (103) is arranged to fit into said cylindrical body (102).

5. The device (100) for reducing pollutant gas emissions by means of catalyst management in the combustion process according to claim 4, **characterised in that** said cover (103) and said cylindrical body (102) fit by means of complementary threads present in each one (107 and 108).

6. The device (100) for reducing pollutant gas emissions by means of catalyst management in the combustion process according to claim 1, **characterised in that** said fuel inlet hole (104) and fuel outlet hole (103) are shaped like a pin and are arranged to fit a fuel supply tube.

7. The device (100) for reducing pollutant gas emissions by means of catalyst management in the combustion process according to claim 1, **characterised in that** a nut-like body is situated on both sides of said cylindrical body, around said holes (103 and 104).

8. The device (100) for reducing pollutant gas emissions by means of catalyst management in the combustion process according to claim 1, **characterised in that** the component of the hydrocarbon that is magnetised are the hydrogen molecules, which pass from the para state to the ortho state.

9. The device (100) for reducing pollutant gas emissions by means of catalyst management in the combustion process according to claim 1, **characterised in that** said device is arranged to be placed in the supply tube between the fuel tank (300) and the engine (400) of a vehicle.
